# EUROPÄISCHE PATENTANMELDUNG

(11) **EP 1 146 694 A2**
(43) Veröffentlichungstag der Anmeldung: **17.10.2001**
(21) Anmeldenummer: 01108952.1
(22) Anmeldetag: 10.04.2001
(51) Int. Cl.: H04L 12/417

(54) **Verfahren zur Regelung des Vielfachzugriffs in Netzwerken**

(30) Priorität: 10.04.2000 DE 10017747
(71) Anmelder: PolyTrax Information Technology AG, 81829 München (DE)
(72) Erfinder: Karner, Bernd, 81675 München (DE)
(74) Vertreter: Strehl Schübel-Hopf & Partner

(57) **Zusammenfassung**

Die Erfindung betrifft ein Verfahren zur Regelung des Vielfachzugriffs von Sendeeinheiten (2) bei der Datenübertragung in einem Netzwerk (1), wobei die Daten von einer Sendeeinheit (2) im Zeitmultiplexverfahren innerhalb bestimmter zyklisch angeordneter Zeitschlitze (6) über das Netzwerk (1) übertragen werden können. Das Verfahren soll insbesondere als Protokoll in einem lokalen Netzwerk auf der Niederspannungsleitung (powerline) im Indoor-Bereich, d.h. zur Datenübertragung innerhalb eines Gebäudes über das Stromnetz, geeignet sein. Es wird vorgeschlagen, daß bei einem Zugriff auf einen nicht belegten Zeitschlitz (8) durch mehrere Sendeeinheiten (2) sich eine dieser Sendeeinheiten (2) im entsprechenden Zeitschlitz (9) des nächsten Zyklus aufgrund eines Vergleichs von Prioritätswerten durchsetzt. Jeder Prioritätswert wird von der Art, der Menge und/oder der Wartezeit der zu übertragenden Daten bestimmt. Der entsprechende Zeitschlitz der dann folgenden Zyklen wird zur Datenübertragung durch die sich durchsetzende Sendeeinheit (2) reserviert.

## Beschreibung

Die vorliegende Erfindung betrifft ein Verfahren zur Regelung des Vielfachzugriffs von Sendeeinheiten bei der Datenübertragung in einem Netzwerk, wobei die Daten von einer Sendeeinheit im Zeitmultiplex innerhalb bestimmter zyklisch angeordneter Zeitschlitze übertragen werden können. Das Verfahren soll insbesondere als Protokoll (Medium Access Control Protocol) in einem lokalen Netzwerk auf der Niederspannungsleitung (powerline) im Indoor-Bereich, d.h. zur Datenübertragung innerhalb eines Gebäudes über das Stromnetz, geeignet sein.

Bei der Powerline-Datenübertragung werden Daten zwischen Teilnehmern oft mittels Sendeeinheiten mit Modems im orthogonalen Frequenzmultiplex (OFDM-Mehrträgerübertragung) in bestimmten zulässigen Frequenzbändern übertragen. Da Stromnetze ursprünglich jedoch nicht für die Datenübertragung konzipiert waren, müssen bei dieser Art der Datenübertragung die besonderen Kanaleigenschaften berücksichtigt werden. Die Eigenschaften des Übertragungsmediums ändern sich mit Ort, Zeit sowie Übertragungsfrequenz. Durch geringe Impedanzen der Verbraucher kommt es zu Übertragungsverlusten. Außerdem treten Störsignale und Rauschen auf.

Verfahren zur Powerline-Datenübertragung sind beispielsweise in den deutschen Anmeldungen DE 199 00 324 sowie 199 33 535 beschrieben.

Standards zur Vernetzung der erwähnten OFDM-Modems auf der Powerline mit einem dazugehörigen Zugriffsprotokoll liegen derzeit nicht vor und Vorschläge hierzu sind nicht bekannt. Das Protokoll soll Dienste wie reine Datenkommunikation (Email, Internet oder Filetransfer), Steuerung (beispielsweise Ein- und Ausschalt- oder Kontrollvorgänge) und Echtzeitanwendungen (Telefonie) integrieren. Die Anforderungen dieser Dienste an Latenzzeit, Datenrate und Fehlerrate (Dienstqualität) müssen garantiert sein. Gleichzeitig ist eine hinreichende Robustheit gegen die auf der Powerline auftretenden Störungen gefordert.

Obwohl bisher noch kein Zugriffsprotokoll vorgeschlagen wurde, das sich insbesondere für die Datenübertragung über Stromversorgungsnetze eignet, sind Zugriffsprotokolle für andere Übertragungsmedien bekannt:

Das gewöhnliche Ethernet beruht auf einer Technik mit Mehrfachzugriff unter Trägererfassung und Kollisionserkennung (CSMA/CD: Carrier Sense Multiple Access with Collision Detect). Zur Kollisionsauflösung wird ein als BEB (Binary Exponential Backoff) bekannter Algorithmus verwendet.

Eine Modifikation dieser Technik, die verschiedenen Sendeeinheiten verschiedene Prioritäten zuordnet, ist in WO 99/43130 angegeben. Diese Druckschrift schlägt vor, daß eine Sendeeinheit, die aus dem Fehlen eines Trägersignals geschlossen hat, daß der Übertragungskanal frei geworden ist, vor Beginn einer Übertragung eine gewisse Zeitspanne wartet. Die Wartezeit hängt von der Priorität der Sendeeinheit ab. Zur Auflösung von Kollisionen zwischen Einheiten mit gleicher Wartezeit wird ein bekannter Baumalgorithmus verwendet. Die Wartezeit wird in Vielfachen einer Zeiteinheit, die als Zeitschlitz bezeichnet wird, gemessen. Im übrigen ist die Datenübertragung nicht an Zeitschlitze gebunden.

Eine CSMA/CD-Technik, bei der kurze Nachrichten Vorrang vor längeren Nachrichten erlangen können, ist in DE-A-3930316 angegeben.

DE-A-4343704 offenbart ein Zugriffsprotokoll mit Trägererfassung und Kollisionsvermeidung (CSMA/CA: Carrier Sensing Medium Access Protocol with Collision Avoidance), bei dem verschiedene Teilnehmer stets unterschiedliche Wartezeiten bis zur Erlaubnis, nach Freiwerden des Kanals senden zu dürfen, einhalten müssen.

Ein anderes Zugriffsprotokoll mit Berücksichtigung von Prioritäten ist in DE-A-3736408 offenbart.

Kollisionsauflösungstechniken in TDMA-Systemen (Time Division Multiple Access) sind in DE-A-4314790 und EP-A-755137 angegeben. Weitere kollisionsauflösende Strategien sind in EP-A-833479, DE-A-19752697 und US-5953344 offenbart.

Aufgabe vorliegender Erfindung ist es, ein Verfahren zur Regelung des Vielfachzugriffs von Sendeeinheiten bei der Datenübertragung in einem Netzwerk anzugeben, das sich insbesondere als Protokoll für ein lokales Powerline-Netzwerk eignet.

Diese Aufgabe wird erfindungsgemäß durch die Merkmale der Ansprüche 1, 12 bzw. 13 gelöst. Vorteilhafte Ausgestaltungen ergeben sich aus den Unteransprüchen.

Die Erfindung verwendet vorzugsweise eine Zeitmultiplex-Technik mit einer Anzahl an Zeitschlitzen, die sich zyklisch wiederholen. Dies hat auf der Niederspannungsleitung des Stromversorgungsnetzes den folgenden Vorteil: Zur Datenübertragung müssen Modems niederohmig in die Stromleitung einkoppeln, um einer geringen Kanalimpedanz auf der Leitung entgegenzuwirken. Deshalb können mehrere Modems nur schwer gleichzeitig senden. Wenn aber die Aufteilung der Kanalkapazität zwischen den Modems im Zeitbereich erfolgt (Time Division Multiple Access, TDMA), stören sich parallel ablaufende Übertragungen nicht gegenseitig. Hierzu werden Zeitschlitze definiert, die sich in bestimmter Anzahl zyklisch wiederholen. Verschiedene Teilnehmer greifen dann auf unterschiedliche Zeitschlitze zur Datenübertragung zu.

Den zu übertragenden Daten wird zunächst ein Prioritätswert zugeordnet, der sich aus der Art des zugehörigen Dienstes und/oder der zu übertragenden Datenmenge und/oder der Wartezeit einer Sendeeinheit auf die Gelegenheit, die bereitgestellten Daten zu übertragen, zusammensetzt. Falls nun zwei (oder mehr) Sendeeinheiten zur Datenübertragung auf denselben Zeitschlitz im gleichen Zyklus zugreifen, treten sie miteinander in einen Wettbewerb, bei dem die zuvor bestimmten Prioritätswerte im entsprechenden Zeitschlitz des darauffolgenden Zyklus miteinander verglichen werden. Diejenige Sendeeinheit, deren Daten die höchste Übertragungspriorität (abhängig vom Prioritätswert) aufweisen, setzt sich auf dem Kanal durch und kann dort in den weiter darauffolgenden Zyklen im entsprechenden Zeitschlitz Daten übertragen. Der Wettbewerb führt also zu einer Reservierung eines Zeitschlitzes, aufgrund der der Teilnehmer in den folgenden Protokollzyklen in demselben Zeitschlitz sendet und keine andere Sendeeinheit darauf zugreifen darf ("Vorwärtsreservierung").

Die Reservierung eines Zeitschlitzes kann durch ein Reservierungssignal, beispielsweise durch Belegung eines Subträgers oder durch ein geeignetes Synchronisations- oder Korrelationssignal von der durchgesetzten Sendeeinheit erfolgen. Erkennen die Teilnehmer in einem Zeitschlitz (Slot) kein Reservierungssignal, wird dieser als frei angenommen, und im nächsten Zyklus kann für diesen Zeitschlitz das Wettbewerbsverfahren erfolgen. In diesem Zusammenhang kann es vorteilhaft sein, wenn mit dem letzten Übertragungsvorgang auf einem reservierten Zeitschlitz dieser explizit (z.B. durch einfaches Weglassen des Reservierungssignals) freigegeben wird, so daß auf diesen bereits im nächsten Zyklus wieder ein Erstzugriff durch andere Sendeeinheiten erfolgen kann.

Für die Prioritätswertbestimmung können die übertragenen Daten hinsichtlich ihrer Art beispielsweise in drei Gruppen unterteilt werden:

Schaltsignale (oder Steuersignale) repräsentieren eine geringe Datenmenge, weshalb sich die Dauer ihrer Kanalbelegung nicht kritisch auf andere Dienste auswirkt. Hingegen ist für Schaltsignale ein schneller Kanalzugriff von Bedeutung, da Verzögerungen beim Schaltvorgang nicht hingenommen werden können. Den Schaltsignalen ist daher Vorrang vor allen anderen Signalen einzuräumen.

Echtzeitverbindungen stellen zwar geringere Anforderungen an die Fehlerfreiheit der Datenübertragung, jedoch ist eine ausreichend hohe Datenrate bei geringer Latenzzeit erforderlich. Außerdem muß sichergestellt sein, daß die Verbindung (z.B. Telefon) beliebig lange auf den reservierten Zeitschlitz zugreifen kann.

Die reinen Datenübertragungen (Datentransferdienste) erlauben höhere Latenzzeiten und besitzen daher die geringste Priorität beim Kanalzugriff. Hingegen muß die Datenrate ausreichend hoch und die Fehlerrate verschwindend gering sein. Für Datentransferdienste wird die Dauer der Belegung eines Zeitschlitzes auf eine bestimmte Anzahl von Zyklen begrenzt, so daß anderen Sendeeinheiten die Möglichkeit eines Kanalzugriffs gegeben wird, wenn der gesamte Kanal vollständig belegt ist. Ist letzteres nicht der Fall und also ein anderer Zeitschlitz frei, ist die Freigabe des vom Datentransferdienst belegten Zeitschlitzes nicht notwendig.

Neben der Art der Datenübertragung kann bei der Prioritätswertbestimmung hinsichtlich der Wartezeit einer Sendeeinheit und dem Datenumfang unterschieden werden, wobei eine größere Wartezeit und Datenmenge einen höheren Prioritätswert bewirken.

Nach den oben beschriebenen Erfordernissen läßt sich ein Prioritätswert P beispielsweise als Bitmuster derart angeben, daß das höchstwertige Bit bei Vorliegen eines Schaltsignals und ein nächsthöchstes Bit beim Vorliegen einer Echtzeitverbindung gesetzt werden. Weitere Bits codieren die Wartezeit einer Sendeeinheit und/oder die Anzahl der in einem Sendepuffer der Sendeeinheit aufgelaufenen Datenpakete.

Die Auswahl einer sich durchsetzenden Sendeeinheit im Wettbewerb kann anhand der Prioritätswerte dezentral erfolgen, wobei jede Sendeeinheit selbst überprüft, ob eine andere Einheit auf dem Kanal sendet und ob diese eine höhere Priorität aufweist und sich beim Wettbewerbsverfahren durchsetzt.

Insbesondere bei variablem Datenaufkommen kann es günstig sein, mehr als nur einen Zeitschlitz für die Datenübertragung durch eine Sendeeinheit zu reservieren. Hierzu wird ein von der Wartezeit einer Sendeeinheit mit sendebereiten Daten und/oder von der zu übertragenden Datenmenge (z.B. Anzahl der Datenpakete im Sendepuffer) abhängiger Wert (WS) definiert, wobei die Sendeeinheit während der Datenübertragung weitere freie Zeitschlitze zu reservieren versuchen kann, solange dieser Wert (WS) einen oberen Schwellenwert (WSₘₐₓ) überschreitet.

Die entsprechende Sendeeinheit kann sich dann erneut im Wettbewerbsverfahren auf dem Kanal durchsetzen und weitere Zeitschlitze für sich reservieren. Fällt hingegen der Wert (WS) unterhalb eines unteren Schwellenwertes WSₘᵢₙ, wird einer der zusätzlichen Zeitschlitze wieder freigegeben.

Die dynamische Zeitschlitzanwahl und -freigabe kann auch unabhängig von der Kanalzugriffsregelung nach Anspruch 1 realisiert werden.

Es kann der Fall auftreten, daß zwei Sendeeinheiten nach dem Wettbewerbsverfahren auf denselben Zeitschlitz zugreifen, weil sie sich beide fälschlicherweise als Gewinner des Wettbewerbs betrachten, oder weil sie sich aufgrund einer ungünstigen Netztopologie nicht wahrnehmen können (sogenannte "Hidden Terminals"). In diesem Fall tritt eine fehlerhafte Datenübertragung auf, die von einem hierfür zuständigen Protokoll z.B. einer Paritätsprüfung erkannt wird. Wird eine bestimmte Anzahl von Fehlern pro Zeitraum oder Anzahl von Zyklen registriert, wird der entsprechende Zeitschlitz freigegeben und es muß eine erneute Reservierung eines Zeitschlitzes von den beiden betroffenen Sendeeinheiten versucht werden, wobei die jeweiligen Kanalzugriffe um einen zufallsbestimmten Zeitraum verzögert sind. Die Verzögerung sollte größer sein als die Dauer eines Zeitschlitzes. Dies stellt sicher, daß es bei einem erneuten Kanalzugriff nicht sofort wieder zur Kollision kommt.

Auch diese Art der Kollisionsauflösung kann unabhängig von der speziellen Kanalzugriffsregelung nach Anspruch 1 implementiert werden.

Die wichtigsten Gesichtspunkte des Verfahrens können wie folgt zusammengefaßt werden:

Es findet eine Vorwärtsreservierung der Kanalkapazität statt, wodurch Datenpaketwiederholungen aufgrund von Kollisionen vermieden werden können. Die Dienstqualität (Quality of Service) kann durch die Vergabe von Prioritätswerten und die Regelung der Slotbelegungsdauer für einen Dienst garantiert werden.

Die Dienstübertragungsqualität und eine gerechte Kapazitätsaufteilung können weiterhin durch die Prioritätswert-Festsetzung für die Kollisionsauflösung beim Kanalzugriff unter Berücksichtigung der Wartedauer oder des Datenaufkommens der Teilnehmer erzielt werden.

Eine dezentrale dynamische Anwahl und Freigabe von Zeitschlitzen aufgrund von Schwellenwerten für die Anzahl der Datenpakete im Sendepuffer oder die Wartezeit der Teilnehmer ist gewährleistet. Hierdurch ist das System robust gegen Störungen und Teilausfälle des Netzes oder einzelner Teilnehmer.

Im folgenden soll ein Ausführungsbeispiel die Erfindung anhand der beigefügten Zeichnungen näher erläutern.

Figur 1 zeigt das Schema eines Netzwerkes zur Datenübertragung von mehreren Sendeeinheiten zu mehreren Empfangseinrichtungen.

Figur 2 zeigt schematisch die zyklisch angeordneten Zeitschlitze (Slots) und deren Reservierung durch das Ausführungsbeispiel.

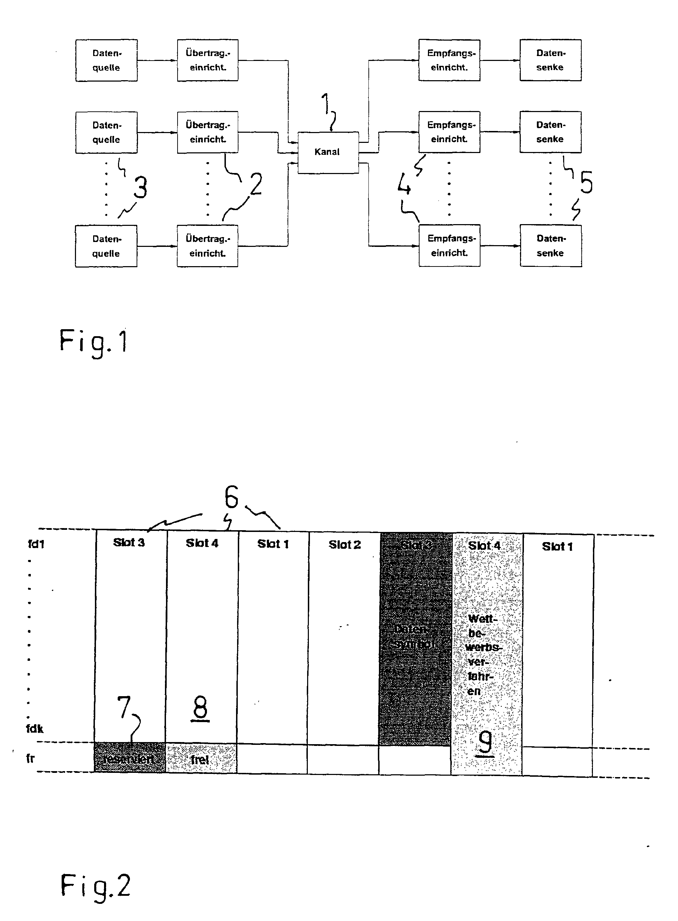

Figur 1 stellt schematisch einen Kanal 1 dar, der durch die Niederspannungsleitung (powerline) aus dem Stromnetz in einer Wohnung oder einem Gebäude gebildet wird. Als Sendeeinheiten 2 sowie als Empfangseinrichtungen 4 dienen OFDM-Modems wie sie von der Anmelderin angeboten werden. Als Datenquellen 3 und als Datensenken 5 fungieren beispielsweise Telefone im Rahmen von Echtzeitdiensten, Licht-, Heizungs- oder andere Geräteschalter, die durch Schaltsignale bedient werden und entsprechende Geräte und PCs für Datentransferdienste, z.B. E-Mail, Filetransfer.

Eine Datenquelle 3 mit einer Sendeeinheit 2 oder eine Datensenke 5 mit einer Empfangseinrichtung 4 bilden jeweils eine Teilnehmerstation am Netzwerk.

Zur Datenübertragung können in Europa derzeit OFDM-Modems genutzt werden, die die in der CENELEC-Norm EN50065 festgelegten rechtlichen Rahmenbedingungen einhalten. Diese arbeiten z.B. mit einer OFDM-Symboldauer von 5ms und senden in den CENELEC-Frequenzbändern B (95 - 125kHz) und D (140 - 148,5kHz). Bei Einsatz einer 64-QAM (Quadratur Amplituden Modulation)-Codierung beträgt die Übertragungsrate etwa 150 kbit/s.

Zur Übertragung der Daten aus den Datenquellen 3 müssen die Sendeeinheit 2 auf den Kanal 1 zugreifen. Das vorliegende Vielfachzugriffsverfahren dient hierbei als Protokoll, das die gemeinsame Nutzung der Niederspannungsleitung durch mehrere gleichzeitig stattfindende Übertragungen erlaubt.

Es werden, wie in Figur 2 dargestellt, vier TDMA-Zeitschlitze 6 (Slot 1 bis Slot 4) der Länge 10 ms eingesetzt. Somit können zwei OFDM-Symbole in einem Zeitschlitz 6 übertragen werden.

Für dieses Ausführungsbeispiel wird ein Prioritätswert P als Bitmuster definiert, dessen höchstes Bit von einem Schaltsignal oder dessen zweithöchstes Bit von einem Echtzeitdienst gesetzt wird. Die darauffolgenden Bits codieren in geeigneter Weise die Anzahl der im Sendepuffer eines Modems der Sendeeinheit 2 aufgelaufenen Datenpakete, verursacht durch Filetransfer, E-Mail oder Internetzugang. Der Prioritätswert P wird von jeder Sendeeinheit 2 abhängig von den zu übertragenden Daten selbst bestimmt. Bei einem Zugriff auf einen nicht belegten Zeitschlitz 8 (Slot 4 im Beispiel der Figur 2) durch mehrere Sendeeinheiten 2 treten die betreffenden Sendeeinheiten 2 im entsprechenden Zeitschlitz 9 (Slot 4) des nächsten Zyklus in einen Wettbewerb, bei dem sie sich die Prioritätswerte mitteilen, jede erkennt, ob sie den höchsten Prioritätswert aufweist, und diejenige Sendeeinheit 2 mit der höchsten Priorität sich auf dem Kanal 1 durchsetzt. Der entsprechende Zeitschlitz (Slot 4) ist dann in den darauffolgenden Zyklen für die sich durchsetzende Sendeeinheit reserviert. Diese Vorwärtsreservierung erfolgt durch ein von dieser Sendeeinheit 2 zu setzendes Reservierungssignal 7, dessen Ausbleiben in einem Zeitschlitz 8 wartenden Sendeeinheiten 2 die Möglichkeit des Erstzugriffs auf den Kanal 1 im entsprechenden Zeitschlitz des folgenden Zyklus signalisiert.

Da die Prioritätswerte der miteinander in Wettbewerb stehenden Sendeeinheiten eine begrenzte Informationsmenge darstellen, können sie alle innerhalb eines Zeitschlitzes übertragen und empfangen werden. Dazu werden beispielsweise verschiedene Subträger für die einzelnen Sendeeinheiten, die Prioritätswerte aussenden, oder verschiedene Unter-Zeitschlitze für sie verwendet.

Bei diesem Ausführungsbeispiel ergibt sich eine Verzögerung (Latenzzeit) für Echtzeitübertragungen von kleiner 4x10ms = 40ms, wenn ein freier Zeitschlitz vorhanden ist. Die Vorwärtsreservierung für Echtzeitdienste ist zeitlich unbegrenzt. Datentransferdienste dürfen in diesem Ausführungsbeispiel maximal 20 Zyklen lang einen Zeitschlitz belegen, wenn alle TDMA-Zeitschlitze belegt sind. Wenn ein Schaltsignal einen Datentransferdienst in einem Zeitschlitz verdrängt, ist die maximale Verzögerung für den Kanalzugriff durch das Schaltsignal (höchste Priorität) also 21 x 4 x 10ms = 840ms (maximale Zeitdauer bis ein Zeitschlitz durch das Wettbewerbsverfahren belegt werden kann).

Die OFDM-Subträger sind in Figur 2 mit fd1...fdk und fr bezeichnet. Der Subträger fr wird zur Übertragung des Reservierungssignals durch die den Zeitschlitz belegende Sendeeinheit 2 verwendet.

Zusammengefaßt bietet das vorliegende Ausführungsbeispiel die folgenden Eigenschaften und Vorteile:

Es sieht ein Steuerverfahren für den Mehrfachzugriff (MAC-Protokoll) für ein lokales Netzwerk, beispielsweise das Stromversorgungsnetz, vor, das auf einer TDMA-Technik mit einer vorbestimmten Anzahl an Zeitschlitzen in jedem Zyklus aufsetzt. Die Sendeeinheiten 2 in den Teilnehmerstationen des Netzwerks können einen oder mehrere freie Zeitschlitze belegen.

Mehrere Teilnehmerstationen können in einen Wettbewerb um einen Zeitschlitz treten. Der Wettbewerb dient der Kollisionsauflösung. Dazu berechnet jede Teilnehmerstation einen Prioritätswert aus der Art der zu übertragenden Daten (Schaltsignalen wird Vorrang vor Echtzeitdiensten und diesen Vorrang vor Datentransferdiensten gegeben), der Menge der zu übertragenden Daten und/oder der Wartezeit der zu übertragenden Daten.

Der Wettbewerb wird von der Teilnehmerstation mit der höchsten Priorität gewonnen, wodurch die Kollision aufgelöst wird.

Der Gewinner des Wettbewerbs reserviert den entsprechenden Zeitschlitz des folgenden Zyklus und kann ihn auch weiter für eine gewisse Zahl an folgenden TDMA-Zyklen reservieren. Die Zahl hängt von der Priorität (also auch der Art) der Datenübertragung ab.

Jede Teilnehmerstation bestimmt aus einem Wert W, der aus der Wartezeit und/oder der zu übertragenden Datenmenge gewonnen wird, in Relation zu einem oberen Schwellenwert Wₘₐₓ und einem unteren Schwellenwert Wₘᵢₙ, ob versucht werden soll, einen weiteren Zeitschlitz zu belegen (wenn W > Wₘₐₓ) oder ob ein Zeitschlitz freigegeben werden soll, wenn W < Wₘᵢₙ). Die Datenübertragung wird unterbrochen, wenn trotz der oben angegebenen Kollisionsauflösung eine Kollision auftritt. Dann wird ab einer zufälligen Zeitspanne ein neuer Zugriffsversuch auf einen Zeitschlitz unternommen.

Das erfindungsgemäße Verfahren kann die geforderte Dienstqualität sicherstellen und garantiert eine gerechte Aufteilung der verfügbaren Datenrate.

## Patentansprüche

1. Verfahren zur Regelung des Vielfachzugriffs durch Sendeeinheiten (2) auf ein Netzwerk (1), zur Übertragung von Daten im Zeitmultiplex innerhalb zyklisch angeordneter Zeitschlitze (6), mit folgenden Schritten:
in Wettbewerb stehende Sendeeinheiten (2) bestimmen während eines Zeitschlitzes innerhalb eines Zyklus, daß der entsprechende Zeitschlitz des folgenden Zyklus zur Datenübertragung verfügbar ist,
die im Wettbewerb stehenden Sendeeinheiten (2) vergleichen innerhalb des genannten entsprechenden Zeitschlitzes des folgenden Zyklus Prioritätswerte, wobei sich diejenige Sendeeinheit mit der höchsten Priorität durchsetzt, und
die durchgesetzte Sendeeinheit (2) reserviert den entsprechenden Zeitschlitz in einem weiter folgenden Zyklus.

2. Verfahren nach Anspruch 2, wobei die Prioritätswerte in Abhängigkeit von der Art, der Menge und/oder der Wartezeit der zu übertragenden Daten von den im Wettbewerb stehenden Sendeeinheiten (2) berechnet werden.

3. Verfahren nach Anspruch 2, **dadurch gekennzeichnet, daß** der Prioritätswert die Art der zu übertragenden Daten in Hinblick auf Schaltsignale, Echtzeitverbindungen und Datentransferdienste unterscheidet.

4. Verfahren nach Anspruch 3, **dadurch gekennzeichnet, daß** die Schaltsignale Vorrang vor den Echtzeitverbindungen und diese Vorrang vor den Datentransferdiensten besitzen, wobei Datentransferdiensten nach Datenumfang und/oder der Wartezeit der jeweiligen Sendeeinheit (2) unterschiedliche Prioritäten vorgegeben werden.

5. Verfahren nach einem der Ansprüche 1 bis 4, **dadurch gekennzeichnet, daß** ein Wert (WS) bestimmt wird, der den von einer Sendeeinheit (2) zu übertragenden Datenumfang und/oder die Wartezeit einer Sendeeinheit (2) angibt, und daß die betreffende Sendeeinheit (2) beim Überschreiten dieses Wertes (WS) über einen bestimmten Schwellenwert (WSₘₐₓ) während der Datenübertragung zur Reservierung weiterer Zeitschlitze (6) auf das Netzwerk (1) zugreift.

6. Verfahren nach Anspruch 5, **dadurch gekennzeichnet, daß** bei mehr als einem reservierten Zeitschlitz (6) beim Unterschreiten des Wertes (WS) unter einen bestimmten anderen Schwellenwert (WSₘᵢₙ) einer der Zeitschlitze (6) wieder freigegeben wird.

7. Verfahren nach einem der Ansprüche 1 bis 6, **dadurch gekennzeichnet, daß** im Falle kollidierender Datenübertragungen zweier Sendeeinheiten (2) auf einem Zeitschlitz (6) die Datenübertragungen abgebrochen werden, um den Zeitschlitz (6) freizugeben und ein erneuter Kanalzugriff durch diese Sendeeinheiten (2) jeweils nur mit einer zufallsbestimmten Zeitverschiebung vorgenommen wird.

8. Verfahren nach einem der Ansprüche 1 bis 7, **dadurch gekennzeichnet, daß** Datentransferdienste einen Zeitschlitz (6) für eine bestimmte maximale Anzahl an Zyklen reservieren und anschließend die Reservierung dieses Zeitschlitzes (6) solange erneuern dürfen, wie nicht alle übrigen Zeitschlitze (6) belegt sind.

9. Verfahren nach einem der Ansprüche 1 bis 8, **dadurch gekennzeichnet, daß** für Echtzeitdienste ein Zeitschlitz (6) für eine unbegrenzte Anzahl an Zyklen reserviert wird.

10. Verfahren nach einem der Ansprüche 1 bis 9, **dadurch gekennzeichnet, daß** Reservierungen von Zeitschlitzen (6) dezentral von den jeweiligen Sendeeinheiten (2) selbst vorgenommen werden.

11. Verfahren nach einem der Ansprüche 1 bis 10, **dadurch gekennzeichnet, daß** eine eine Datenübertragung in einem Zeitschlitz beendende Sendeeinheit die Freigabe des Zeitschlitzes (6) zusammen mit dem letzten Übertragungsvorgang auf diesem Zeitschlitz (6) anzeigt.

12. Verfahren zum Vielfachzugriff von Sendeeinheiten (2) auf ein Netzwerk (1), zur Übertragung von Daten im Zeitmultiplex innerhalb bestimmter zyklisch angeordneter Zeitschlitze (6),
wobei eine einen Zeitschlitz (6) reserviert habende Sendeeinheit (2), abhängig vom zu übertragenden Datenumfang und/oder von der Wartezeit der zu übertragenden Daten einen Wert (WS) bestimmt, und daß beim Überschreiten dieses Wertes (WS) über einen Schwellenwert (WSₘₐₓ) die betreffende Sendeeinheit (2) zur Reservierung eines weiteren Zeitschlitzes (6) auf das Netzwerk (1) zugreift, und
bei mehr als einem reservierten Zeitschlitz (6) beim Unterschreiten des Wertes (WS) unter einen anderen Schwellenwert (WSₘᵢₙ) einer der Zeitschlitze (6) wieder freigegeben wird.

13. Verfahren zum Vielfachzugriff von Sendeeinheiten (2) auf ein Netzwerk (1) zur Übertragung von Daten im Zeitmultiplex innerhalb bestimmter zyklisch angeordneter Zeitschlitze (6),
wobei im Falle kollidierender Datenübertragungen zweier Sendeeinheiten (2) auf einem Zeitschlitz (6) dieser von beiden Sendeeinheiten (2) freigegeben wird und ein erneuter Netzwerkzugriff durch jede Sendeeinheit (2) jeweils nur nach einer zufallsbestimmten Zeitverschiebung vorgenommen wird.
